# EUROPÄISCHE PATENTSCHRIFT

(11) **EP 3 340 767 B1**
(45) Veröffentlichungstag und Bekanntmachung des Hinweises auf die Patenterteilung: **06.05.2020**
(21) Anmeldenummer: 16760419.8
(22) Anmeldetag: 25.08.2016
(51) Int. Cl.: A01C 7/20, A01C 5/06

(54) **SAESCHARANORDNUNG EINER LANDWIRTSCHAFTLICHEN MASCHINE**
SEEDING COULTER ARRANGEMENT OF AN AGRICULTURAL MACHINE
ARRANGEMENT D'UN SOC DE SEMIS D'UNE MACHINE AGRICOLE

(30) Priorität: 28.08.2015 DE 102015114362
(43) Veröffentlichungstag der Anmeldung: 04.07.2018
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes
(86) Internationale Anmeldenummer: PCT/EP2016/070027
(87) Internationale Veröffentlichungsnummer: WO 2017/036896

(56) Entgegenhaltungen:
- EP-A1- 0 404 241
- WO-A1-2011/119095
- WO-A1-2015/031840
- US-A- 4 307 674
- US-B1- 6 386 127

## Beschreibung

Die vorliegende Erfindung betrifft eine Säscharanordnung einer landwirtschaftlichen Maschine zur Bodenbearbeitung und/oder zum Ausbringen von Verteilgütern wie Saatgut, Dünger oder dergl. mit den Merkmalen des unabhängigen Anspruchs 1.

Säschare wie Doppelscheibenschare oder Einscheibenschare oder Zinkenschare sind aus dem Stand der Technik in vielfältigsten Ausgestaltungsformen bekannt. Ein derartiges Säschar geht bspw. aus der EP 2 022 307 B1 hervor. Das dargestellte Säschar findet an einer landwirtschaftlichen Einzelkornsämaschine Verwendung. An einem Scharrahmen sind wenigstens eine Sechscheibe als Furchenöffnungselement und dahinter ein Saatrohr mit zugeordneter Fangrolle und nachgeordneter Druckrolle angebracht. Um die Montage und Wartung des Saatrohrs zu vereinfachen, ist vorgesehen, dass das Saatrohr, die Fangrolle und die Druckrolle als Einheit in lösbarer und/oder wegschwenkbarer Weise an einem Scharrahmen angeordnet sind. Um eine optimale Verteilgutabgabe aus einem Saatrohr in eine Saatfurche zu gewährleisten, ist der Auslass des Saatrohrs darüber hinaus derartig angeordnet, dass der Saatfluss tangential zum Umfang der Fangrolle gerichtet ist. Nach der Fangrolle folgt eine Druckrolle, mittels welcher das Verteilgut in den Boden gedrückt wird. Die Fangrolle und die Druckrolle sind an einem gemeinsamen schwenkbaren Träger montiert, was den Nachteil aufweist, dass Stöße und Schläge bzw. Vibrationen, welche bspw. durch Bodenunebenheiten auf das Säschar wirken, jeweils von der Fangrolle auf die Druckrolle und umgekehrt übertragen werden, wodurch die erforderliche gleichmäßige Verteilgutabgabe verschlechtert wird.

Ein weiteres Säschar zeigt die DE 2 934 121 C2. Dieses besteht aus einem Furchenöffner mit nachlaufender Druckrolle. Der Furchenöffner kann bspw. als Zinkenschar oder dergl. ausgebildet sein. Die Druckrolle dient darüber hinaus sowohl zur Tiefenführung als auch als Fangelement. Nach einer Dosier- bzw. Vereinzelungsvorrichtung wird das Verteilgut in ein Saatrohr abgegeben. In diesem wird das Verteilgut anschließend pneumatisch beschleunigt. Der Auslass des Saatrohrs ist derartig angeordnet, dass der Saatfluss eine Winkelhalbierende zwischen einer Bodenoberfläche und einer Tangente zur Druckrolle bildet. Somit soll das durch das Saatrohr beschleunigte Verteilgut abgebremst und ein Verspringen bzw. Verrollen dieses in der Saatfurche unterbunden werden. Die Druckrolle kann sich jedoch unabhängig zum Auslass des Saatrohrs bewegen, wodurch diese gewünschte Anordnung und dieser Effekt teilweise verschlechtert werden.

Ein weiteres Säschar für eine Einzelkornmaschine zeigt die WO 2011 119 095 A1. Das Säschar weißt ein pneumatisch beaufschlagtes Saatrohr auf, welches seitlich zu wenigstens einer Sechscheibe angeordnet ist. Der Auslass des Saatrohrs bzw. der Saatfluss am Auslass des Saatrohrs ist derartig gerichtet, dass dieser eine Tangente zu einem Umfang eines Fangelements, vorzugsweise einer Fangrolle bildet. Die Fangrolle und eine dieser nachgeordneten Druckrolle sind an einem gemeinsamen Scharrahmen montiert, wobei die Druckrolle wiederum schwenkbar zum Scharramen gelagert ist. Die Fangrolle und die Druckrolle sind somit entkoppelt voneinander. Ebenso ist auch das Saatrohr bzw. die Dosiervorrichtung von der Fangrolle entkoppelt, wodurch wiederum die tangentiale Anordnung nicht dauerhaft gewährleistet wird und somit die Verteilgutabgabe negativ beeinflusst wird. Dies kann sich darüber hinaus in Abhängigkeit der Bodenbedingungen bzw. von Stößen und Vibrationen entsprechend verbessern oder verschlechtern, wodurch eine dauerhafte gleichmäßige Verteilgenauigkeit nicht sichergestellt wird.

Es sind somit aus dem Stand der Technik zahlreiche verschiedene Säschare bekannt, welche jeweils ein Saatrohr, ein Fangelement und eine Druckrolle aufweisen, wobei jedoch eine definierte Anordnung eines Saatrohres zu einer Fangrolle nicht dauerhaft gewährleistet wird, wodurch eine Verteilgenauigkeit nicht dauerhaft erzielt werden kann.

Die aus dem Stand der Technik bekannt gewordenen Säschare mit einer Dosiervorrichtung zur Einzelkorndosierung sind in der Regel über ein sog. Parallelogramm an einer landwirtschaftlichen Maschine befestigt. Dies hat den Vorteil, dass sich das Säschar unabhängig von deren Arbeitstiefe stets parallel zu einer Bodenoberfläche bewegt. Darüber hinaus sind derartige Säschare in der Regel als sog. Doppelscheibenschare ausgeführt, d.h. dass zwei in einem Winkel zueinander angeordnete Schneidscheiben jeweils eine Saatfurche erzeugen. Derartige Parallelogramme sind jedoch sehr aufwendig aufgrund von deren Teileaufwand. Zudem sind derartige Säschare sehr wartungsintensiv, da die jeweiligen Parallelogramme sehr viele Drehpunkte aufweisen. Des Weiteren sind derartige Doppelscheibenschare insbesondere für eine Direktsaat nur bedingt geeignet, da für das Eindringen der zwei Schneidscheiben große Kräfte benötigt werden.

Eine Alternative zu derartigen Doppelscheibenscharen mit Parallelogramm stellen hier die sog. Einscheibenschare dar. Ein Einscheibenschar geht bspw. aus der EP 0 956 755 A1 hervor. Die Einscheibenschare sind in der Regel über einen zentralen Drehpunkt an einer landwirtschaftlichen Maschine befestigt. Ebenso wird die Saatfurche nur mittels einer, in einem Winkel zur Fahrrichtung angeordneten Schneidscheibe erzeugt. Insbesondere zur Direktsaat, also zur Saat in einen unbearbeiteten Ackerboden, finden derartige Säschare Verwendung. Jedoch ist es bislang nicht möglich, an derartigen Säscharen mit zentralem Drehpunkt eine Dosiervorrichtung zur Einzelkorndosierung zu montieren, da bei diesem bereits eine geringe Tiefenverstellung einen großen Einfluss in Bezug auf die Position zwischen Saatrohr und Saatfurche bzw. zwischen Saatrohr und Fangrolle hat. Insbesondere die Winkelpositionen werden hierbei stark beeinflusst, wodurch eine exakte Saatgutablage bei verschiedenen Saattiefen nicht gewährleistet werden kann.

Die der Erfindung zugrunde liegende Aufgabe wird somit darin gesehen, ein Säschar bzw. eine Säscharanordnung einer landwirtschaftlichen Maschine mit einer verbesserten Anordnung einer Dosiervorrichtung, eines Saatrohrs und eines Fangelementes zueinander sowie in Bezug auf eine Druckrolle oder ein furchenschließendes Element zu schaffen, wodurch eine Anordnung eines Saatrohrauslasses zu einem Fangelement stets weitgehend konstant gehalten wird. Durch die erfindungsgemäße verbesserte Anordnung soll eine dauerhafte, gleichmäßige Verteilgutabgabe aus einem Saatrohr in eine Saatfurche gewährleistet werden.

Diese Aufgabe wird durch die Lehre des Patentanspruchs 1 gelöst, wobei in den weiteren Patentansprüchen Merkmale aufgeführt sind, die die Erfindung in vorteilhafter Weise weiterentwickeln.

So schlägt die vorliegende Erfindung eine Säscharanordnung, bspw. mit einer Einscheiben- oder Doppelscheibenschar, zum Ausbringen von Verteilgütern wie Saatgut, Dünger oder dergl. vor. Die Säscharanordnung besitzt zumindest eine Aufhängungsvorrichtung zur Montage des Säschars an einer Rahmenkonstruktion. Weiter umfasst die erfindungsgemäße Säscharanordnung einen Scharrahmen, an welchem die Komponenten des Säschars bzw. der Anordnung montiert werden können. Am Scharrahmen ist wenigstens eine drehbar angeordnete Sechscheibe oder ein Furchenöffner zur Erzeugung einer Saatfurche angebracht. In die Saatfurche wird das jeweils auszubringende Verteilgut abgelegt. Am Scharrahmen kann darüber hinaus eine drehbar angeordnete Tiefenführungsrolle montiert sein, mittels welcher die Tiefeneinstellung der Sechscheibe bzw. der Saatfurche erfolgt. Der wenigstens einen Sechscheibe bzw. dem Furchenöffner nachgeordnet und am Scharrahmen drehbar oder mittels Tandem gelagert ist eine Druckrolle zum Andrücken des Verteilguts und zum Verschließen der Saatfurche vorhanden. Auch wäre es denkbar, dass als furchenschließendes Element bspw. ein Striegel oder dergl. Räumwerkzeug am Scharrahmen angebracht ist bzw. sind, mittels welchen die Saatfurche ebenso verschlossen werden kann.

Weiter umfasst die erfindungsgemäße Säscharanordnung eine Dosiervorrichtung zur zumindest weitgehend vereinzelten bzw. vergleichmäßigten Abgabe des Verteilguts sowie dieser nach- bzw. zugeordnet ein Saatrohr. Das Saatrohr kann seitlich zu einer Sechscheibe bzw. mittig zwischen zwei Sechscheiben oder hinter dem Furchenöffner angeordnet sein. Der Auslass des Saatrohrs mündet vorzugsweise in einem Bereich unmittelbar oberhalb einer Bodenoberfläche bzw. der Saatfurche. Dem Auslass des Saatrohrs ist ein Fangelement nachgeordnet. Dieses Fangelement befindet sich vorzugsweise neben wenigstens einer Sechscheibe bzw. zwischen den zwei Sechscheiben oder hinter dem Furchenöffner und vor der Druckrolle bzw. dem furchenschließenden Element. Der Auslass des Saatrohrs ist derartig gerichtet, das ein Saatfluss entsteht, der bspw. eine Tangentiale zu einem Umfang des Fangelements bzw. der Fangrolle bilden kann. Somit soll das Verteilgut vom Fangelement in der Saatfurche abgebremst und gegen Verrollen und Verspringen geschützt werden, wodurch eine verbesserte Verteilgutabgabe in der Saatfurche erreicht wird. Um dies unabhängig von Bewegungen des Fangelements und/oder der Druckrolle sowie unabhängig von der Arbeitstiefe stets zu gewährleisten, bilden zumindest die Dosiervorrichtung, das Saatrohr sowie das Fangelement eine Einheit und sind an einem gemeinsamen Träger angebracht, welcher Träger, vorzugsweise über eine Achse oder mittels Parallelogramm, schwenkbar am Scharrahmen angebracht ist. Der Träger kann sich somit unabhängig von der Druckrolle bewegen. Wodurch zum einen, bspw. eine tangentiale Anordnung zwischen Saatfluss und Fangelement stets gewährleistet wird, sowie Bewegungen des Fangelements nicht auf den Scharrahmen sowie die Druckrolle und umgekehrt übertragen werden. Stöße, Vibrationen oder dergl. haben somit keinen Einfluss mehr auf die Verteilgutabgabe.

Mit der genannten Einheit, welche zumindest die Dosiervorrichtung, das Saatrohr sowie das Fangelement bilden, ist eine bauliche bzw. baulich integrierte Einheit gemeint, die an dem gemeinsamen Träger angebracht ist.

Insbesondere bei Säscharen, welche über einen zentralen Drehpunkt mit einer landwirtschaftlichen Maschine verbunden sind, kann somit eine dauerhaft konstante Verteilgenauigkeit erreicht werden, da Veränderungen der Winkelposition des Säschares keinen Einfluss mehr auf die Position zwischen Saatrohr und Fangelement haben. Dies kann insbesondere noch verbessert werden, wenn der Träger der Dosiervorrichtung, des Saatrohres sowie des Fangelements über ein Parallelogramm mit dem Scharrahmen oder mit der landwirtschaftlichen Maschine verbunden ist.

Neben der Dosiervorrichtung, dem Saatrohr sowie der Fangrolle, wäre es in einer weiteren Ausführungsform noch vorstellbar, dass ebenso der an einem Säschar, insbesondere an einem Einscheibenschar vorhandene Furchenöffner ebenso Teil dieser Einheit ist und ebenso am Träger bzw. am Saatrohr angebracht ist.

Neben einer tangentialen Anordnung des Saatflusses zum Umfang des Fangelements wäre auch vorstellbar, dass der Saatfluss eine Winkelhalbierende oder eine Linie bildet, die zwischen der Bodenoberfläche und einer Tangente zum Umfang des Fangelements angeordnet ist. Wobei die Tangente zum Umfang des Fangelements in Bezug auf die Bodenoberfläche einen Winkel einschließt, der kleiner 75°, insbesondere kleiner 60°, vorzugsweise kleiner 45° ist. Wodurch wiederum das Verteilgut abgebremst und ein Verspringen bzw. Verrollen unterbunden werden kann.

Die Anordnung des Saatflusses ist vorzugweise derartig gerichtet, das der Saatfluss durch das Fangelement unterbunden bzw. unterbrochen wird, wodurch das Verteilgut abgebremst und ein Verrollen und Verspringen des Verteilgut in der Saatfurche unterbunden wird.

Eine Verbindung des Trägers mit dem Scharrahmen mittels Parallelogramm bzw. Viergelenkanordnung hätte darüber hinaus den Vorteil, dass ein Winkel zwischen Saatfluss und einer Bodenoberfläche unabhängig von der Bearbeitungstiefe stets weitgehend konstant ist. Ebenso wäre es vorstellbar, dass die Aufhängungsvorrichtung des Säschars ein Parallelogramm bildet. Auch wäre es denkbar, dass sowohl die Aufhängungsvorrichtung als auch die Verbindung zwischen Scharrahmen und Träger ein Parallelogramm bilden. Generell sind somit verschiedenste Aufhängungsvorrichtungen und Verbindungen vorstellbar bzw. denkbar, wobei dieses jeweils derartig gestaltet sind, dass eine Anordnung zwischen einem Auslass eines Saatrohres zu einem Fangelement unabhängig von Bewegungen des Säschares stets konstant gehalten werden kann.

In einer weiteren Ausgestaltungsvariante wäre es denkbar, dass die Sechscheibe und der Träger an einem gemeinsamen Drehpunkt bzw. an einer gemeinsamen Achse drehbar gelagert sind.

Der Träger kann über ein Federelement gegen die Bodenoberfläche bzw. die Saatfurche vorgespannt sein. Als Federelement kann bspw. eine Druckfeder, ein hydraulisches oder pneumatisches Stellelement oder dergl. Verwendung finden. Auch andere Federelemente wären vorstellbar. Durch die Vorspannung soll die Einheit aus Saatrohr und Fangelement konstant in der Saatfurche geführt werden. Die Vorspannung ist jedoch vorzugsweise derartig gewählt, dass eine Bewegung des Trägers, bspw. bei der Überfahrt von Steinen, noch möglich ist. Diese Vorspannung bzw. diese Federmöglichkeit hat zudem den Vorteil, dass das Fangelement bspw. aus einem harten Material, wie bspw. einem metallischen Werkstoff oder einem Kunststoff oder einem Verbundwerkstoff, gefertigt werden kann, welche Werkstoffe gegenüber elastischen Materialien wesentlich langlebiger und kostengünstiger sind. Ebenso wären jedoch auch elastische Materialien vorstellbar, bspw. aus elastischen Kunststoffen oder Verbundwerkstoffen oder Gummi Werkstoffen, wobei durch Verwendung derartiger Materialien die Vorspannung des Trägers entfallen könnte. Die Ausgestaltung des Fangelements aus elastischem Material hätte darüber hinaus den Vorteil, dass mittels des elastischen Fangelements eine weitere Abfederung von Stößen und Schlägen erfolgt, wodurch wiederum die gesamte Verteilgutabgabe nicht negativ beeinflusst wird. Ebenso wäre es vorstellbar, dass nur das Fangelement mittels Feder in Richtung der Saatfurche vorgespannt ist.

Dem Säschar ist eine Dosiervorrichtung zugeordnet. Durch diese Dosiervorrichtung kann das jeweils auszubringende Verteilgut zumindest weitgehend vereinzelt werden, wobei für diese Vereinzelung verschiedene aus dem Stand der Technik bekannte Vereinzelungsmethoden angewandt werden können. So kann die Dosiervorrichtung bspw. nach dem Differenzdruckprinzip oder nach dem Zentrifugalprinzip arbeiten. Vorzugsweise kann die Dosiervorrichtung nach dem Überdruckprinzip arbeiten und insbesondere die in der deutschen Patentanmeldung 10 2015 101 253.7 beschriebenen Merkmale aufweisen. Ebenso könnte die Dosiervorrichtung nach dem Zentrifugalprinzip arbeiten und die in der deutschen Patentanmeldung 10 2012 105 081.3 oder die in der deutschen Patentanmeldung 10 2012 105 048.1 beschriebenen Merkmale aufweisen. Auch mechanische Dosiervorrichtungen wären vorstellbar bzw. denkbar.

Das Verteilgut kann in der Dosiervorrichtung und/oder im Saatrohr eine aktive Beschleunigung erfahren. Dies kann bspw. durch eine Vereinzelungsscheibe, welche im inneren der Dosiervorrichtung rotiert, erfolgen oder mittels eines Differenzdrucks, welcher zwischen dem Gehäuse der Dosiervorrichtung und dem Auslass des Saatrohrs herrscht. Auch können pneumatische Düsen bspw. eine Ringdüse oder dergl. Verwendung finden. Durch die Beschleunigung wird das Verteilgut mit einer Geschwindigkeit durch das Saatrohr befördert, welche vorzugsweise größer als die Erdbeschleunigung ist. Durch diese Beschleunigung sollen Stöße und Vibrationen auf den Transport des Verteilguts im Saatrohr keinen Einfluss haben.

Auch wäre es vorstellbar, dass das Saatrohr ein Förderband aufweist, d.h. dass das Verteilgut nicht mittels Schwerkraft oder Luftströmung durch das Saatrohr befördert wird, sondern dass ein Förderband das Verteilgut von der Dosiervorrichtung aufnimmt und nach unten zur Saatfurche transportiert.

Der Scharrahmen kann sowohl einteilig als auch mehrteilig gebildet sein. So könnte der Scharrahmen bspw. ein Scharrohr besitzen, an welches Scharrohr verschiedenste Montagebleche oder Montageelemente oder dergl. montiert sein können. Das Scharrohr könnte zudem bspw. als Guss- oder Schmiedeteil gefertigt sein. Auch könnten im Scharrohr bzw. Scharrahmen Lagerungselemente oder Teile der Aufhängungsvorrichtung integriert sein.

Die Aufhängungsvorrichtung kann ebenso in vielfältiger Weise gestaltet sein, wobei mittels dieser jedoch jeweils der Scharrahmen bzw. das Säschar mit einer Rahmenkonstruktion einer landwirtschaftlichen Maschine verbunden wird. So könnte die Aufhängungsvorrichtung über eine Schwenkachse bzw. über einen zentralen Drehpunkt schwenkbar mit der Rahmenkonstruktion verbunden werden. Ebenso könnte die Schwenkachse hierfür bspw. mittels einer aus dem Stand der Technik bekannten Gummischnurlagerung versehen sein. Auch könnte die Aufhängungsvorrichtung ein Parallelogramm aufweisen. Auch eine starre bzw. feste Verbindung zwischen Säschar und Rahmenkonstruktion wäre denkbar, wobei jedoch schwenkbare bzw. bewegliche Verbindungen bevorzugt Verwendung finden.

Weiter könnte die Druckrolle und/oder das Fangelement und/oder die Tiefenführungsrolle jeweils mit der gleichen Rolle realisiert werden, so dass keine drei Rollen bzw. Elemente benötigt werden, sondern lediglich eine Rolle bzw. ein Element, wodurch der Teileaufwand wesentlich verringert werden kann. D.h., wenn bei der Auflistung der Komponenten der erfindungsgemäßen Säscharanordnung von mehreren Funktionselementen die Rede war, so ist dies nicht zwingend dahingehend zu verstehen, dass es sich dabei um getrennte Bauteile handeln muss. Vielmehr können mehrere Funktionen zusammengefasst und von einem oder von zwei Bauteilen erfüllt werden.

Die Tiefenführungsrolle kann darüber hinaus an verschiedensten Positionen am Säschar angebracht werden. So bspw. zumindest abschnittweise neben der Sechscheibe bzw. neben dem Zinkenschar und/oder zumindest abschnittweise neben dem Fangelement. Aber auch hinter der Sechscheibe bzw. dem Zinkenschar und hinter dem Fangelement, wobei bei einer derartigen Ausführungsform die Tiefenführungsrolle auch die Druckrolle bilden kann.

Die vorliegende Erfindung ist insbesondere zur Verwendung in sog. Einscheibenscharen geeignet. Diese Säschare werden in der Regel bei der Direktsaat verwendet, d.h. mittels dieser wird in unbearbeiteten Flächen Verteilgut ausgebracht. Durch diese Art der Aussaat werden jedoch an die Säschare hohe Anforderungen gestellt, um eine ausreichende Verteilgenauigkeit zu erreichen, da es durch den nicht bearbeiteten Boden zu besonders ausgeprägten Vibrationseffekten kommen kann. Durch die erfindungsgemäße Anordnung des Saatrohres und des Fangelements an einem gemeinsamen Träger wird somit die Verwendung einer Dosiervorrichtung an einem Einscheibenschar bei gleich bleibender Verteilqualität erst realisierbar.

Im Zusammenhang mit der vorliegenden Erfindungsbeschreibung ist meist von der erfindungsgemäßen Säscharanordnung die Rede. Teilweise wird auch verkürzend von einem Säschar gesprochen, wenn die erfindungsgemäße Anordnung gemeint ist. Diese Begriffe sind generell synonym zu verstehen, so dass sie wahlweise auch ausgetauscht werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante eines Säschar einer landwirtschaftlichen Maschine.
Fig. 2 zeigt in einer Seitenansicht eine Ausführungsvariante eines Säschar mit Dosiervorrichtung, Saatrohr, Fangelement und Druckrolle.
Fig. 3 zeigt in einer Detailansicht eine Ausführungsvariante der Einheit aus Dosiervorrichtung, Saatrohr und Fangelement an einem Träger.
Fig. 4 zeigt in fünf schematischen Seitenansichten (Fig. 4a bis Fig. 4e) weitere Ausführungsvarianten von Säscharen mit verschiedenen Ausgestaltungsmöglichkeiten von Trägern und deren Anordnung.

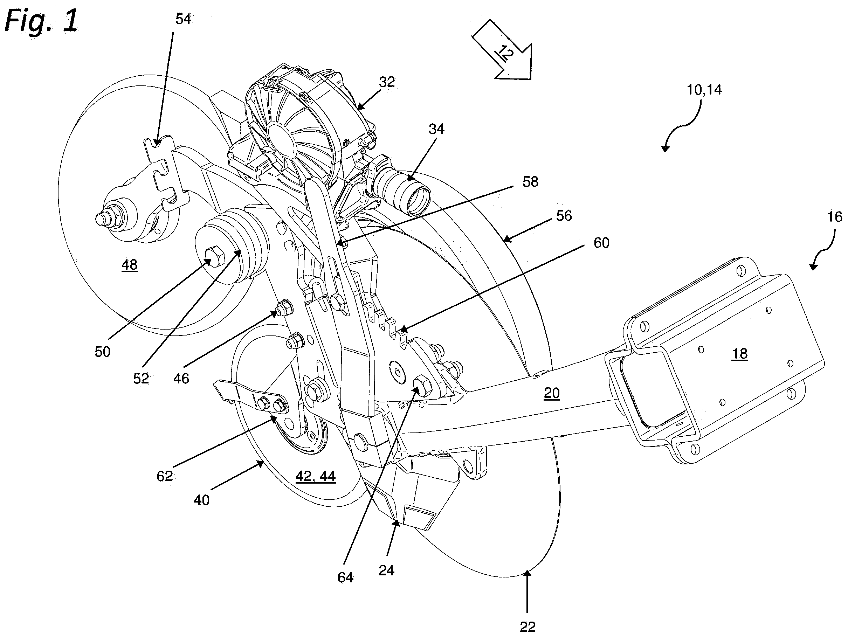

Für gleiche oder gleich wirkende Elemente der Erfindung werden in den Figuren 1 bis 4e jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsvarianten stellen lediglich Beispiele dar, wie das erfindungsgemäße Säschar ausgestaltet sein kann und stellen keine abschließende Begrenzung dar.

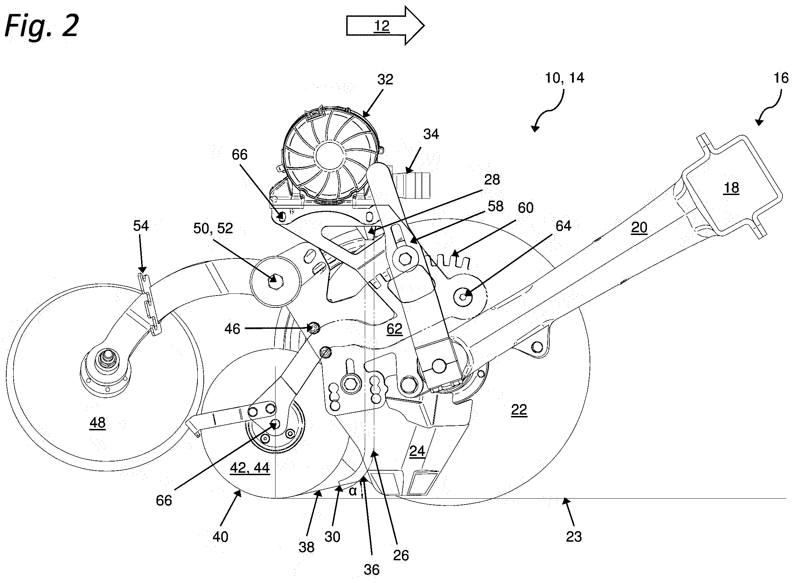

Die Fig. 1 zeigt in einer schematischen Perspektivansicht eine Ausführungsvariante einer erfindungsgemäßen Säscharanordnung 10, welche bspw. an einer landwirtschaftlichen Maschine zum Ausbringen von landwirtschaftlichen Verteilgütern wie Saatgut, Dünger oder dergl. Verwendung finden kann. Die Fig. 2 zeigt die identische Ausführungsform der Säscharanordnung 10 gemäß Fig. 1 in einer Seitenansicht. Die Säscharanordnung 10 ist jeweils entgegengesetzt zu einer Fahrtrichtung 12 abgebildet. Derartige Säscharanordnungen 10 können bspw. in regelmäßigen Abständen zueinander an einer Rahmenkonstruktion einer landwirtschaftlichen Maschine angebracht sein. Beim Ausführungsbeispiel der Säscharanordnung 10 gemäß der Fig. 1 und 2 handelt es sich um ein sog. Einscheibenschar 14. Die erfindungsgemäße Anordnung könnte jedoch ebenso bei einem Doppelscheibenschar oder einem Zinkenschar oder dergl. Verwendung finden, wobei jedoch Einscheibenschare bevorzugt verwendet werden.

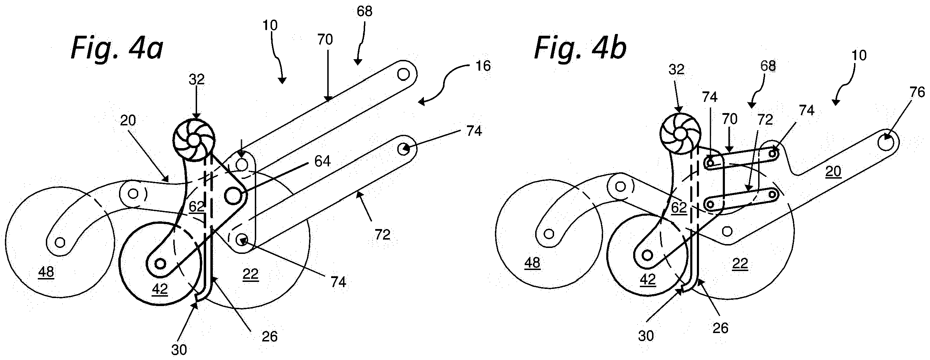

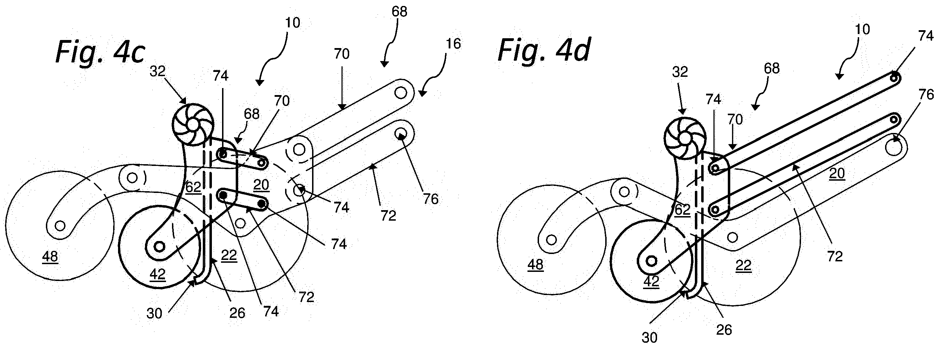

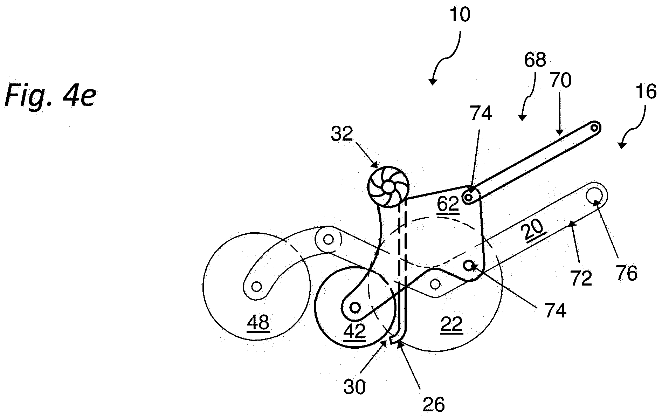

Die Säscharanordnung 10 wird über eine Aufhängungsvorrichtung 16 bzw. über eine, aus dem Stand der Technik bekannte, über eine zentrale Drehachse geführte Gummischnurlagerung schwenkbar mit einer, hier nicht dargestellten, Rahmenkonstruktion verbunden. Ebenso wären jedoch auch andere Aufhängungsvorrichtungen 16, wie bspw. Flanschbleche oder Anschweißplatten oder ein Parallelogramm (vergl. Fig. 4) oder dergl., denkbar. Mittels der Aufhängungsvorrichtung 16 kann die gesamte Säscharanordnung 10 radial um die Rahmenkonstruktion verschwenkt werden und somit die Säscharanordnung 10 bspw. zwischen einer abgesenkten Feldposition und einer ausgehobenen Straßenposition bewegt werden. Weiter ist an einem Lagergehäuse 18 der Aufhängungsvorrichtung 16 ein Scharrahmen 20 mittels Schweißen angebracht, wobei auch hier andere Montagearten vorstellbar wären. Am Scharrahmen 20 werden die entsprechenden Scharwerkzeuge montiert. Der Scharrahmen 20 ist asymmetrisch zum Lagergehäuse 18 angeordnet, wobei auch eine symmetrische Anordnung möglich wäre. Der Scharrahmen ist mehrteilig ausgebildet und besteht aus einem Scharrohr und daran angebrachten Montageblechen. Ebenso wäre jedoch auch eine einteilige Ausgestaltung denkbar.

Am Scharrahmen 20 ist eine drehbar gelagerte Sech- bzw. Schneidscheibe 22 angebracht. Mittels dieser wird eine Saatfurche in eine Bodenoberfläche 23 eingebracht, in welche anschließend das auszubringende Verteilgut abgelegt wird. Um eine ausreichende Größe der Saatfurche zu gewährleisten, ist die Sechscheibe 22 vorzugsweise in einem Winkel quer zur Fahrtrichtung angeordnet, wobei dieser Winkel bspw. zwischen ca. 4° und 8° betragen kann. Im Ausführungsbeispiel beträgt dieser Winkel jedoch ca. 6°. Auch ist der Sechscheibe 22 noch ein Furchenöffner 24 bzw. eine sog. Säkufe 24 zugeordnet, um zum einen ein Anhaften von Erde an der Sechscheibe 22 zu verhindern und zum anderen die Saatfurche bis zur Saatgutablage geöffnet zu halten.

Ebenso wäre es jedoch auch vorstellbar, dass je zwei gegenüberliegende Sechscheiben 22 am Scharrahmen 20 angeordnet sind, welche somit ein Doppelscheibenschar bilden. Mittels dieser in einem Winkel zueinander angeordneten Sechscheiben 22 kann ebenfalls eine ausreichend große Saatfurche erzeugt werden. Der sich aus den zwei Sechscheiben 22 bildendende Keil beträgt bspw. wenigstens 4° vorzugsweise jedoch wenigstens 8° oder mehr.

Seitlich neben der wenigstens eine Sechscheibe 22 bzw. hinter dem Furchenöffner 24 oder zwischen den zwei Sechscheiben 22 ist ein Saatrohr 26 angeordnet. Dieses Saatrohr 26 mündet mit dessen Einlass 28 in eine sich ebenfalls an der Säscharanordnung 10 befindliche Dosiervorrichtung 32. Mittels der Dosiervorrichtung 32 wird das auszubringende Verteilgut zumindest weitgehend vereinzelt bzw. vergleichmäßigt, wobei hierzu diverse aus dem Stand der Technik bekannte Vereinzelungsprinzipien Verwendung finden können. Bspw. derartige, die nach dem Differenzdruckprinzip arbeiten oder welche, die nach dem Zentrifugalprinzip arbeiten. Bei der Dosiervorrichtung 32 gemäß der Ausführungsbeispiele der Figuren 1 bis 4 handelt es sich um eine Dosiervorrichtung 32, welche nach dem Zentrifugalprinzip arbeitet. Der Dosiervorrichtung 32 wird hierzu über einen Stutzen 34 ein Saatgut-Luft-Gemisch zugeführt. Innerhalb der Dosiervorrichtung 32 rotiert eine Vereinzelungsscheibe, welche an deren äußeren Umfang wenigstens eine Tasche bzw. ein Öffnung zur Aufnahme von Körner des Verteilgutes aufweist. Durch eine Rotation der Vereinzelungsscheibe werden im Zusammenhang mit einer Gehäusewand Körner von der Tasche aufgenommen, vereinzelt und zu einem Abgabebereich befördert. In diesem Abgabebereich mündet das obere Ende des Saatrohrs 26. Durch die Rotation der Vereinzelungsscheibe und einem im Gehäuse vorhandenen Luftstrom erfährt das vereinzelte Verteilgut eine aktive Beschleunigung, wodurch die Körner mit einer größeren Geschwindigkeit als die Erdbeschleunigung durch das Saatrohr 26 transportiert werden. Die Beschleunigung des Verteilgutes könnte jedoch auch rein pneumatisch erfolgen. Ebenso könnte das Verteilgut auch ohne Beschleunigung durch das Saatrohr 26 transportiert werden.

Das Saatrohr 26 ist in den Ausführungsbeispielen der Figuren 1 bis 4 jeweils senkrecht zur Fahrtrichtung 12 angeordnet und geht in Richtung des Auslasses 30 des Saatrohrs 26 in eine gekrümmte Form 36 über. Vorstellbar wäre jedoch auch ein Saatrohr 26, welches über deren Länge sich veränderte Radien und Formen aufweist. Insbesondere wären auch sichelförmige oder dergl. Saatrohr-Formen vorstellbar.

Zudem ist das Saatrohr 26 jeweils hinter einem Furchenöffner 24 angebracht. Es wäre jedoch auch vorstellbar, dass das Saatrohr 26 in den Furchenöffner 24 mündet bzw. durch den Furchenöffner 24 hindurch geführt wird. Auch wäre es denkbar, dass das Saatrohr 26 in den Furchenöffner 24 mündet und somit der Furchenöffner 24 den weiteren Verlauf des Saatrohrs 26 bildet. Insbesondere wäre es somit denkbar, dass das Saatrohr 26 zwischen der wenigstens einen Sechscheibe 22 und dem Furchenöffner 24 angebracht ist. Auch wäre es denkbar, dass der Furchenöffner 24 ebenso am Träger 62 mit angebracht ist. Es wäre somit denkbar, dass an der Säscharanordnung 10 eine Einheit angebracht ist, welche sich aus der Dosiervorrichtung 32, dem Saatrohr 26, dem Fangelement 42 sowie dem Furchenöffner 24 zusammensetzt.

Der Auslass 30 des Saatrohrs 26 ist entgegengesetzt zur Fahrtrichtung 14 geneigt. Dadurch entsteht ein Saatfluss 38, welcher bspw. zumindest weitgehend tangential zu einer äußeren Kontur bzw. zu einem Umfang 40 eines dem Auslass 30 des Saatrohrs 26 nachgeordneten Fangelements 42 ist. Mittels des Fangelements 42, welches im Ausführungsbeispiel als Fangrolle 44 ausgeführt ist, werden die Körner nach Abgabe aus dem Saatrohr 26 abgebremst bzw. gefangen. Dadurch wird ein Verrollen und Verspringen des Verteilguts in der Saatfurche weitgehend unterbunden. Das Fangelement 42 kann bspw. über eine Lochkulisse 46 in Bezug auf die Sechscheibe 22 bzw. den Träger 62 in dessen Tiefe verstellt werden. Nach dem Fangelement 42 folgt eine Druckrolle 48, welche über einen Drehpunkt 50 beweglich gelagert ist und mittels einer Feder 52 vorgespannt wird. Diese Feder 52 kann ebenfalls in deren Vorspannkraft über ein Raster 54 verstellt werden. Mit Hilfe der Druckrolle 48 wird das Verteilgut in den Boden gedrückt und die zuvor gezogene Saatfurche wieder geschlossen, so dass das Verteilgut mit Erde bedeckt ist.

Die Tiefeneinstellung der Säscharanordnung 10 erfolgt über eine Tiefenführungsrolle 56, welche ebenfalls drehbar am Scharrahmen 20 montiert wird und sich auf der gegenüberliegenden Seite der Sechscheibe 22 bzw. des Furchenöffners 24 befindet. Zur Tiefenverstellung kann die Höhe bzw. die Position der Tiefenführungsrolle 56 mittels eines Einstellhebels 58 und einer Verzahnung 60 in Bezug auf die Sechscheibe 22 bzw. den Furchenöffner 24 verstellt werden, wodurch wiederum die Tiefe der Saatfurche entsprechend verstellt werden kann. Die Tiefenführungsrolle 56 ist darüber hinaus derartig zur Sechscheibe 22 angeordnet, dass diese neben der Tiefenführung auch als Abstreifer einer Seite der Sechscheibe 22 dient.

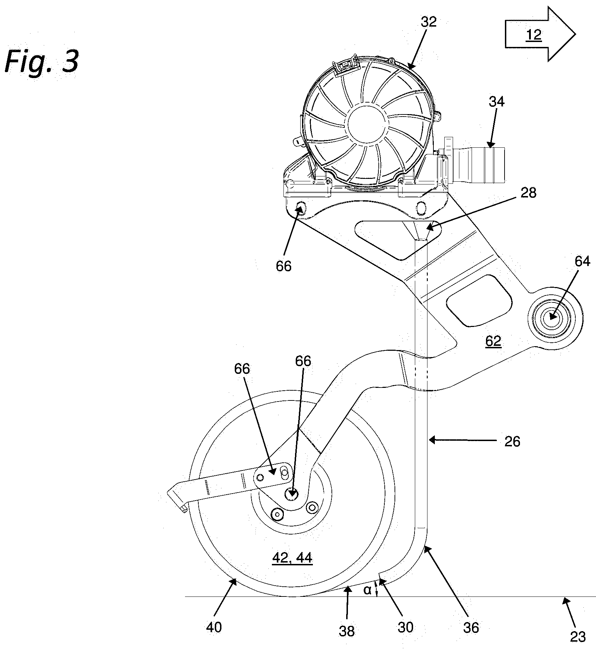

Wie aus den Figuren 1 und 2 sowie insbesondere aus der Fig. 3 hervorgeht, sind die Dosiervorrichtung 32, das Saatrohr 26 sowie das Fangelement 42 als eine Einheit an einem Träger 62 montiert. Dieser Träger 62 ist über eine Achse 64 drehbar am Scharrahmen 20 montiert. Vorzugsweise wird dieser mittels bspw. einer Feder oder mittels Hydraulik- oder Pneumatikzylinder oder dergl. gegen eine Bodenoberfläche 23 vorgespannt. Mit Hilfe der Einheit aus Saatrohr 26 und Fangelement 42 wird eine Anordnung zwischen Saatfluss 38 bzw. einem Auslass 30 des Saatrohrs 26 zu einem Umfang 40 des Fangelements 42 unabhängig von der Saattiefe bzw. Bearbeitungstiefe stets zumindest weitgehend konstant gehalten. In den Figuren 2 und 3 ist dies eine tangentiale Anordnung. Es wären jedoch auch andere Anordnungen denkbar bzw. vorstellbar.

Insofern das Saatrohr 26 bspw. Teil des Furchenöffners 24 ist, kann auch dieser Furchenöffner 24 zusammen mit dem Saatrohr 26, dem Fangelement 42 und der Dosiervorrichtung 32 am Träger 62 montiert werden.

Im Ausführungsbeispiel ist der Träger 62 als Blech gebildet, welchem Blech Montageelemente 66 zur Befestigung des Fangelements 42 und der Dosiervorrichtung 32 zugeordnet sind.

Der Träger 62 ist in den Ausführungsbeispielen der Figuren 1 bis 3 jeweils über eine Achse 64 drehbar mit dem Scharrahmen 20 verbunden. Durch eine derartige Anordnung ergeben sich in Abhängigkeit der jeweiligen Bearbeitungstiefe unterschiedliche Winkel α zwischen einem Saatfluss 38 und einer Bodenoberfläche 23. Vorstellbar wäre jedoch auch, dass der Träger 62 über ein Parallelogramm 68 bzw. eine Viergelenkanordnung mit dem Scharrahmen 20 verbunden wird, wodurch erreicht wird, dass ein Winkel zwischen einem Saatfluss 38 und einer Bodenoberfläche 23, unabhängig von der Bearbeitungstiefe stets weitgehend konstant ist. Dies kann noch weiter verbessert werden, wenn sowohl der Träger 62 als auch die Aufhängungsvorrichtung 16 jeweils mittels eines Parallelogramms 68 mit dem Scharrahmen 20 bzw. der Rahmenkonstruktion verbunden werden. Säscharanordnungen 10 mit derartigen Parallelogrammen 68 gehen aus den Figuren 4a bis 4e hervor.

Hierbei zeigt die Fig. 4a eine Säscharanordnung 10, bei welcher die Aufhängungsvorrichtung 16 als Parallelogramm 68 ausgebildet ist. Das Parallelogramm 68 besteht aus einem Oberlenker 70 und einem Unterlenker 72, welche jeweils mittels Koppelpunkte 74 mit einem Scharrahmen 20 und einer hier nicht dargestellten Rahmenkonstruktion verbunden sind. Am Scharrahmen 20 sind eine Sechscheibe 22 und eine Druckrolle 48 angebracht, sowie über eine Achse 64 schwenkbar, ein Träger 62, an dem wiederum eine Dosiervorrichtung 32, ein Saatrohr 26 und ein Fangelement 42 derartig angeordnet sind, dass diese eine Einheit bilden, wodurch die Anordnung eines Auslasses 30 des Saatrohrs 26 zum Fangelement 42, stets weitgehend konstant gehalten wird.

Weiter zeigt die Fig. 4b eine Säscharanordnung 10, welche schwenkbar über eine Schwenkachse 76 und mittels eines Scharrahmens 20 an einer, hier nicht dargestellten Rahmenkonstruktion montiert wird. Am Scharrahmen 20 sind eine Sechscheibe 22 und eine Druckrolle 48 angebracht, sowie über ein Parallelogramm 68 schwenkbar, ein Träger 62, an dem wiederum eine Dosiervorrichtung 32, ein Saatrohr 26 und ein Fangelement 42 derartig angeordnet sind, dass diese eine Einheit bilden, wodurch eine Anordnung eines Auslass 30 des Saatrohrs 26 zum Fangelement 42, stets weitgehend konstant gehalten wird. Das Parallelogramm 68 besteht aus einem Oberlenker 70 und einem Unterlenker 72, welche jeweils über Koppelpunkte 74 eine schwenkbare Verbindung zwischen dem Träger 62 und dem Scharrahmen 20 herstellen.

Darüber hinaus zeigt die Fig. 4c eine Kombination der Ausführungsvarianten der Säscharanordnung 10 gemäß den Figuren 4a und 4b. Die Aufhängungsvorrichtung 16 der Säscharanordnung 10 ist hierbei als Parallelogramm 68 ausgebildet und besteht aus einem Oberlenker 70 und einem Unterlenker 72, welche jeweils mittels Koppelpunkte 74 mit einem Scharrahmen 20 und einer hier nicht dargestellten Rahmenkonstruktion verbunden sind. Am Scharrahmen 20 sind eine Sechscheibe 22 und eine Druckrolle 48 angebracht, sowie über ein weiteres Parallelogramm 68 schwenkbar, ein Träger 62, an dem wiederum eine Dosiervorrichtung 32, ein Saatrohr 26 und ein Fangelement 42 derartig angeordnet sind, dass diese eine Einheit bilden, wodurch eine Anordnung eines Auslasses 30 des Saatrohrs 26 zum Fangelement 42, stets weitgehend konstant gehalten wird. Das Parallelogramm 68 besteht aus einem Oberlenker 70 und einem Unterlenker 72, welche jeweils über Koppelpunkte 74 eine Verbindung zwischen dem Träger 62 und dem Scharrahmen 20 herstellen.

Weiter zeigt die Fig. 4d eine nicht dem beanspruchten Erfindungsgegenstand entsprechende Säscharanordnung 10, welche schwenkbar über eine Schwenkachse 76 und mittels eines Scharrahmen 20 an einer, hier nicht dargestellten Rahmenkonstruktion montiert wird. Am Scharrahmen 20 sind eine Sechscheibe 22 und eine Druckrolle 48 angebracht. Ein Träger 62 wird über ein Parallelogramm 68 schwenkbar an einer hier nicht dargestellten Rahmenkonstruktion einer landwirtschaftlichen Maschine angebracht, an welchem Träger 62 wiederum eine Dosiervorrichtung 32, ein Saatrohr 26 und ein Fangelement 42 derartig angeordnet sind, dass diese eine Einheit bilden, wodurch eine Anordnung eines Auslasses 30 des Saatrohrs 26 zum Fangelement 42 stets weitgehend konstant gehalten wird. Das Parallelogramm 68 besteht aus einem Oberlenker 70 und einem Unterlenker 72, welche jeweils über Koppelpunkte 74 eine schwenkbare Verbindung zwischen dem Träger 62 und der Rahmenkonstruktion herstellen.

Eine weitere Ausführungsvariante geht aus der Fig. 4e hervor. Die Aufhängungsvorrichtung 16 der Säscharanordnung 10 bildet zusammen mit dem Träger 62 ein Parallelogramm 68. Dieses Parallelogramm 68 besteht aus einem Oberlenker 70 und einem Unterlenker 72 welche jeweils über Schwenkachsen 76 mit einer Rahmenkonstruktion verbunden sind. Der Oberlenker 70 weist einen Koppelpunkt 74 auf, über welchen der Träger 62 geführt ist. Der Scharrahmen 20 weist einen weiteren Koppelpunkt 74 auf, über welchen der Träger 62 ebenso geführt ist, wodurch wiederum ein Parallelogramm 68 gebildet wird. D.h. die Säscharanordnung 10 wird zum einen über eine zentrale Schwenkachse 76 mit der Rahmenkonstruktion verbunden. Der Träger 62, d.h. die Einheit aus Dosiervorrichtung 32, Saatrohr 26 und Fangelement 42, wird jedoch über ein Parallelogramm 68 geführt, was zur Folge hat, dass eine Tiefenverstellung der Säscharanordnung 10 keine Auswirkungen auf eine Winkelposition des Saatflusses zur Bodenoberfläche hat. Ebenso wird diese Anordnung stets weitgehend konstant gehalten. Am Scharrahmen 20 sind weiter eine Sechscheibe 22 zur Erzeugung einer Saatfurche und eine Druckrolle 48 zum Schließen der Saatfurche angebracht.

Im Zusammenhang mit der vorstehenden Figurenbeschreibung ist generell von der erfindungsgemäßen Säscharanordnung 10 die Rede. Teilweise wird auch verkürzend von einem Säschar gesprochen, wenn die erfindungsgemäße Anordnung 10 gemeint ist. Es sei vorsorglich darauf hingewiesen, dass diese Begriffe generell synonym zu verstehen sind, so dass sie wahlweise auch ausgetauscht werden können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Säscharanordnung
- 12: Fahrtrichtung
- 14: Einscheibenschar
- 16: Aufhängungsvorrichtung
- 18: Lagergehäuse
- 20: Scharrahmen
- 22: Sech- Schneidscheibe
- 23: Bodenoberfläche
- 24: Furchenöffner
- 26: Saatrohr
- 28: Einlass
- 30: Auslass
- 32: Dosiervorrichtung
- 34: Stutzen
- 36: gekrümmte Form
- 38: Saatfluss
- 40: Umfang
- 42: Fangelement
- 44: Fangrolle
- 46: Lochkulisse
- 48: Druckrolle
- 50: Drehpunkt
- 52: Feder
- 54: Raster
- 56: Tiefenführungsrolle
- 58: Einstellhebel
- 60: Verzahnung
- 62: Träger
- 64: Achse
- 66: Montageelemente
- 68: Parallelogramm
- 70: Oberlenker
- 72: Unterlenker
- 74: Koppelpunkte
- 76: Schwenkachse

## Patentansprüche

1. Säscharanordnung (10) einer landwirtschaftlichen Maschine zum Ausbringen von Verteilgütern wie Saatgut, Dünger oder dergl., umfassend wenigstens:
- eine Aufhängungsvorrichtung (16) zur Montage der Säscharanordnung (10) an einer Rahmenkonstruktion,
- einen mit der Aufhängungsvorrichtung (16) verbundenen Scharrahmen (20) zur Montage von Komponenten der Säscharanordnung (10) an diesem,
- eine am Scharrahmen (20) drehbar angeordnete Sechscheibe (22) und/oder einen Furchenöffner (24) zur Erzeugung einer Saatfurche,
- eine am Scharrahmen (20) drehbar und/oder mittels Tandem gelagerte und über einen Drehpunkt (50) drehbar montierte Druckrolle (48) oder furchenschließende Werkzeuge zum Verschließen der Saatfurche,
- eine Dosiervorrichtung (32) zur zumindest weitgehend vereinzelten Abgabe von Verteilgut,
- ein Saatrohr (26) zum Transport des Verteilguts von der Dosiervorrichtung (32) zu einer Saatfurche,
- ein dem Auslass (30) des Saatrohrs (26) nachgeordnetes Fangelement (42) zum Fangen des Verteilguts,
**dadurch gekennzeichnet, dass** die Dosiervorrichtung (32), das Saatrohr (26) und das Fangelement (42) eine bauliche Einheit bilden und an einem schwenkbar am Scharrahmen (20) angebrachten Träger (62) montiert sind, wodurch eine Anordnung des jeweiligen Auslasses (30) des Saatrohres (26) zum jeweiligen Fangelement (42) stets weitgehend konstant gehalten wird.

2. Säscharanordnung (10) nach Anspruch 1, bei welcher der Träger (62) mittels einer Achse (64) schwenkbar mit einem Scharrahmen (20) oder einer Rahmenkonstruktion verbunden ist, oder dass der Träger (62) mittels eines Parallelogramms (68) schwenkbar mit einem Scharrahmen (20) oder einer Rahmenkonstruktion verbunden ist.

3. Säscharanordnung (10) nach Anspruch 1 oder 2, bei welcher der Scharrahmen (20) über eine Schwenkachse (76) mit einer Rahmenkonstruktion verbunden ist, und bei welcher der Träger (62) über ein Parallelogramm (68) geführt wird, welches Parallelogramm (68) einen Koppelpunkt (74) im Scharrahmen (20) aufweist und über einen Oberlenker (70) mit dem Träger (62) verbunden ist.

4. Säscharanordnung (10) nach Anspruch 1 oder 2, bei welcher der Träger (62) und die Sechscheibe (22) an einer gemeinsamen Achse (64) gelagert sind.

5. Säscharanordnung (10) nach einem der vorhergehenden Ansprüche, bei der die Dosiervorrichtung (32) mittels Differenzdruckprinzip und/oder Zentrifugalprinzip oder mechanisch das Verteilgut weitgehend vereinzelt bzw. vergleichmäßigt.

6. Säscharanordnung (10) nach einem der vorhergehenden Ansprüche, bei der das Verteilgut in der Dosiervorrichtung (32) und/oder im Saatrohr (26) eine aktive Beschleunigung erfährt.

7. Säscharanordnung (10) nach einem der vorhergehenden Ansprüche 1 bis 5, bei der das Saatrohr (26) ein Förderband aufweist, mittels welchem das Verteilgut von der Dosiervorrichtung (32) zur Saatfurche transportiert wird.

8. Säscharanordnung (10) nach einem der vorhergehenden Ansprüche, bei der am Auslass (30) des Saatrohrs (26) ein Saatfluss (38) entsteht, der zumindest weitgehend tangential zum Umfang (40) des Fangelements (42) gerichtet ist, welches Fangelement (42) durch eine Fangrolle (44) gebildet ist.

9. Säscharanordnung (10) nach einem der vorhergehenden Ansprüche, **dadurch gekennzeichnet, dass** am Auslass (30) des Saatrohrs (26) ein Saatfluss (38) entsteht, der eine Winkelhalbierende oder eine Linie bildet, die zwischen der Bodenoberfläche (23) und einer Tangente zum Umfang (40) des als Fangrolle (44) ausgebildeten Fangelements (42) angeordnet ist und wobei die Tangente zum Umfang (40) in Bezug auf die Bodenoberfläche (23) einen Winkel einschließt, der kleiner 75°, insbesondere kleiner 60°, vorzugsweise kleiner 45° ist.

10. Säscharanordnung (10) nach einem der vorhergehenden Ansprüche, bei der am Auslass (30) des Saatrohrs (26) ein Saatfluss (38) entsteht, der durch das Fangelement (42) unterbunden und/oder unterbrochen wird.

11. Säscharanordnung (10) nach einem der vorhergehenden Ansprüche, bei der das Fangelement (42) aus einem elastischen Werkstoff und/oder aus einem Kunststoff-Werkstoff und/oder metallischen Werkstoff oder einem Verbundwerkstoff gefertigt ist.

12. Säscharanordnung (10) nach einem der vorhergehenden Ansprüche, die eine Tiefenführungsrolle (56) aufweist, welche zumindest abschnittsweise neben der Sechscheibe (22) und/oder hinter dem Fangelement (42) und/oder hinter der Druckrolle (48) angeordnet ist.

13. Säscharanordnung (10) nach einem der vorhergehenden Ansprüche, bei der die Druckrolle (48) auch die Tiefenführungsrolle (56) und/oder das Fangelement (42) bildet.

14. Säscharanordnung (10) nach einem der vorhergehenden Ansprüche, bei der das Saatrohr (26) in den Furchenöffner (24) mündet und das Saatrohr (26) in seinem weiteren Verlauf durch den Furchenöffner gebildet ist/wird.

15. Säscharanordnung (10) nach einem der vorhergehenden Ansprüche, bei welcher der Furchenöffner (24), das Saatrohr (26), das Fangelement (42) und die Dosiervorrichtung (32) eine Einheit bilden, welche an einem Träger (62) montiert ist.

## Claims

1. A sowing coulter arrangement (10) of an agricultural machine for the spreading of materials to be distributed, such as seeds, fertilisers, or the like, the sowing coulter arrangement (10) comprising at least:
- a suspension device (16) for the mounting of the sowing coulter arrangement (10) on a frame structure;
- a coulter frame (20) for the mounting of components of the sowing coulter arrangement (10) thereon, the coulter frame (20) being connected to the suspension device (16);
- a coulter disc (22) for the creating of a seed furrow, the coulter disc (22) being disposed in a rotatable manner on the coulter frame (20), and/or a furrow opener (24) for the creating of a seed furrow;
- a pressure roller (48) for the closing of the seed furrow, the pressure roller (48) being pivot-mounted and/or tandem-mounted on the coulter frame (20) and being mounted in a rotatable manner via a pivot point (50), or furrow-closing implements for the closing of the seed furrow;
- a metering device (32) for the dispensing in an at least largely separated manner of the material to be distributed;
- a seed tube (26) for the transporting of the material to be distributed from the metering device (32) to a seed furrow; and
- a catching element (42) for the catching of the material to be distributed, the catching element being disposed downstream of the outlet (30) of the seed tube (26);
**characterised in that** the metering device (32), the seed tube (26), and the catching element (42) form a constructional unit and are mounted on a carrier (62) that is pivotably affixed to the coulter frame (20), whereby an arrangement of the particular outlet (30) of the seed tube (26) in relation to the particular catching element (42) is at all times kept largely constant.

2. The sowing coulter arrangement (10) according to claim 1, in which the carrier (62) is pivotably connected to a coulter frame (20) or to a frame structure by means of an axle (64), or with the carrier (62) being pivotably connected to a coulter frame (20) or to a frame structure by means of a parallelogram linkage (68).

3. The sowing coulter arrangement (10) according to claim 1 or 2, in which the coulter frame (20) is connected to a frame structure via a swivel axle (76), and in which the carrier (62) is guided via a parallelogram linkage (68) that has a coupling point (74) in the coulter frame (20) and that is connected to the carrier (62) via an upper link (70).

4. The sowing coulter arrangement (10) according to claim 1 or 2, in which the carrier (62) and the coulter disc (22) are mounted on a common axle (64).

5. The sowing coulter arrangement (10) according to one of the previous claims, in which the metering device (32) to a large extent separates or, as the case may be, evenly disperses the material to be distributed based on the principle of differential pressure and/or on the principle of centrifugation or in a mechanical manner.

6. The sowing coulter arrangement (10) according to one of the previous claims, in which the material to be distributed undergoes an active acceleration in the metering device (32) and/or in the seed tube (26).

7. The sowing coulter arrangement (10) according to one of the previous claims 1 to 5, in which the seed tube (26) has a conveyor belt by means of which the material to be distributed is transported from the metering device (32) to the seed furrow.

8. The sowing coulter arrangement (10) according to one of the previous claims, in which a seed flow (38) is generated at the outlet (30) of the seed tube (26), the seed flow (38) being aligned at least largely tangential to the circumference (40) of the catching element (42), and the catching element (42) being formed by a catching roller (44).

9. The sowing coulter arrangement (10) according to one of the previous claims, **characterised in that** a seed flow (38) is generated at the outlet (30) of the seed tube (26), the seed flow (38) forming an angle bisector or a line that is disposed between the ground surface (23) and a tangent to the circumference (40) of the catching element (42) designed as catching roller (44), and wherein the tangent to the circumference (40) encloses an angle in relation to the ground surface (23), the angle being less than 75°, in particular less than 60°, preferably less than 45°.

10. The sowing coulter arrangement (10) according to one of the previous claims, in which a seed flow (38) is generated at the outlet (30) of the seed tube (26), the seed flow (38) being cut off and/or interrupted by the catching element (42).

11. The sowing coulter arrangement (10) according to one of the previous claims, in which the catching element (42) is made from an elastic material and/or from a plastic material and/or a metallic material or a composite material.

12. The sowing coulter arrangement (10) according to one of the previous claims, which sowing coulter arrangement (10) has a depth control roller (56) that is at least in sections disposed next to the coulter disc (22) and/or behind the catching element (42) and/or behind the pressure roller (48).

13. The sowing coulter arrangement (10) according to one of the previous claims, in which the pressure roller (48) forms the depth control roller (56) and/or the catching element (42) as well.

14. The sowing coulter arrangement (10) according to one of the previous claims, in which the seed tube (26) ends in the furrow opener (24) and in which the continuation of the seed tube (26) is/becomes formed by the furrow opener.

15. The sowing coulter arrangement (10) according to one of the previous claims, in which the furrow opener (24), the seed tube (26), the catching element (42), and the metering device (32) form a unit that is affixed to a carrier (62).

## Revendications

1. Ensemble de soc semeur (10) d'une machine agricole destinée à épandre des produits à distribuer, tels que les semences, les engrais ou similaires, comprenant au moins:
- un dispositif de suspension (16) conçu pour monter ledit ensemble de soc semeur (10) sur une structure de châssis,
- un châssis de soc (20) relié au dispositif de suspension (16) et conçu pour monter des composants de l'ensemble de soc semeur (10) sur celui-ci,
- un disque de coutre (22) monté de manière rotative sur le châssis de soc (20) et/ou un ouvre-sillon (24) pour produire un sillon à graines,
- un rouleau presseur (48) logé de manière rotative et/ou en tandem et monté de manière rotative par un pivot (50) sur le châssis de soc (20), ou des outils de fermeture de sillon destinés à fermer le sillon à graines,
- un dispositif de dosage (32) destiné à distribuer de façon individualisée des produits à distribuer, au moins dans une large mesure,
- un tube à graines (26) destiné à transporter les produits à distribuer depuis ledit dispositif de dosage (32) vers un sillon à graines,
- un élément de capture (42) disposé en aval de la sortie (30) du tube à graines (26) et destiné à capturer les produits à distribuer,
**caractérisé par le fait que** le dispositif de dosage (32), le tube à graines (26) et ledit élément de capture (42) forment une unité constructive et sont montés sur un support (62) fixé de manière pivotante au châssis de soc (20) ce par quoi un agencement de la sortie (30) respective du tube à graines (26) par rapport à l'élément de capture (42) respectif est maintenu toujours dans une large mesure constant.

2. Ensemble de soc semeur (10) selon la revendication 1, dans lequel le support (62) est relié de façon pivotante au moyen d'un axe (64) à un châssis de soc (20) ou à une construction de châssis, ou que le support (62) est relié de façon pivotante au moyen d'un parallélogramme (68) à un châssis de soc (20) ou à une construction de châssis.

3. Ensemble de soc semeur (10) selon la revendication 1 ou 2, dans lequel le châssis de soc (20) est relié par un axe de pivotement (76) à une construction de châssis, et dans lequel le support (62) est guidé par l'intermédiaire d'un parallélogramme (68), lequel parallélogramme (68) présente un point de couplage (74) dans le châssis de soc (20) et est relié au support (62) par l'intermédiaire d'un bras oscillant supérieur (70).

4. Ensemble de soc semeur (10) selon la revendication 1 ou 2, dans lequel le support (62) et le disque de coutre (22) sont montés sur un axe (64) commun.

5. Ensemble de soc semeur (10) selon l'une quelconque des revendications précédentes, dans lequel le dispositif de dosage (32) individualise ou bien uniformise dans une large mesure les produits à distribuer au moyen du principe de pression différentielle et/ou du principe centrifuge ou de façon mécanique.

6. Ensemble de soc semeur (10) selon l'une quelconque des revendications précédentes, dans lequel les produits à distribuer subissent une accélération active à l'intérieur du dispositif de dosage (32) et/ou du tube à graines (26).

7. Ensemble de soc semeur (10) selon l'une quelconque des revendications précédentes 1 à 5, dans lequel ledit tube à graines (26) comprend une bande transporteuse au moyen de laquelle les produits à distribuer sont transportés depuis le dispositif de dosage (32) vers le sillon à graines.

8. Ensemble de soc semeur (10) selon l'une quelconque des revendications précédentes, dans lequel un flux de graines (38) est formé à la sortie (30) du tube à graines (26), qui est dirigé au moins dans une large mesure tangentiellement à la circonférence (40) de l'élément de capture (42), lequel élément de capture (42) est formé par un rouleau de capture (44).

9. Ensemble de soc semeur (10) selon l'une quelconque des revendications précédentes, **caractérisé par le fait qu'**un flux de graines (38) est formé à la sortie (30) du tube à graines (26), qui forme une bissectrice ou une ligne qui est disposée entre la surface de fond (23) et une tangente à la circonférence (40) de l'élément de capture (42) conçu en tant que rouleau de capture (44), et dans lequel la tangente à la circonférence (40) forme un angle par rapport à la surface de fond (23) qui est inférieur à 75°, en particulier inférieur à 60°, de préférence inférieure à 45°.

10. Ensemble de soc semeur (10) selon l'une quelconque des revendications précédentes, dans lequel un flux de graines (38) est formé à la sortie (30) du tube à graines (26), qui est empêché et/ou interrompu par l'élément de capture (42).

11. Ensemble de soc semeur (10) selon l'une quelconque des revendications précédentes, dans lequel ledit élément de capture (42) est réalisé en un matériau élastique et/ou en un matériau de matière plastique et/ou un matériau métallique ou un matériau composite.

12. Ensemble de soc semeur (10) selon l'une quelconque des revendications précédentes, qui présente un rouleau de guidage en profondeur (56) lequel est disposé au moins par sections à côté du disque de coutre (22) et/ou derrière l'élément de capture (42) et/ou derrière le rouleau presseur (48).

13. Ensemble de soc semeur (10) selon l'une quelconque des revendications précédentes, dans lequel ledit rouleau presseur (48) forme également le rouleau de guidage en profondeur (56) et/ou l'élément de capture (42).

14. Ensemble de soc semeur (10) selon l'une quelconque des revendications précédentes, dans lequel le tube à graines (26) débouche dans l'ouvre-sillon (24) et le tube à graines (26) est formé dans sa continuation par l'ouvre-sillon.

15. Ensemble de soc semeur (10) selon l'une quelconque des revendications précédentes, dans lequel l'ouvre-sillon (24), le tube à graines (26), l'élément de capture (42) et le dispositif de dosage (32) forment une unité qui est montée sur un support (62).
